Europäisches Patentamt

European Patent Office

Office européen des brevets

(11) Publication number: **0 197 905 B1**

(12) **EUROPEAN PATENT SPECIFICATION**

(45) Date of publication of patent specification: **26.02.92**  (51) Int. Cl.⁵: **A47J 37/06**, H05B 3/72

(21) Application number: **86850102.4**

(22) Date of filing: **20.03.86**

(54) **Apparatus for preparing food.**

(30) Priority: **22.03.85 SE 8501430**
**17.02.86 SE 8600690**

(43) Date of publication of application:
**15.10.86 Bulletin 86/42**

(45) Publication of the grant of the patent:
**26.02.92 Bulletin 92/09**

(84) Designated Contracting States:
**BE CH DE GB IT LI NL SE**

(56) References cited:
DE-A- 1 579 652   DE-C- 213 454
GB-A- 436 229    GB-A- 895 862
GB-A- 895 863    US-A- 1 879 212
US-A- 2 351 130   US-A- 2 899 888
US-A- 3 050 834   US-A- 3 245 462
US-A- 3 317 709

**Webster's Ninth New Collegiate Dictionary,
1983, p. 537**

(73) Proprietor: **Novlab Storkök AB
Box 7
S-260 24 Röstanga(SE)**

(72) Inventor: **Clevenholm, Roy
Kägelundsgränd 9 Barsebäcks Hamn
S-240 21 Löddeköpinge(SE)**

(74) Representative: **Lagman, Sven et al
H. ALBIHNS PATENTBYRA AB P.O. Box 3137
S-103 62 Stockholm(SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

# Description

The invention relates to an apparatus for preparing food, particularly by frying, in which there is included a griddle and a heat source intended for heating the griddle, the griddle being of a material of the compound type, with an upper layer of corrosion resistant material and a lower layer, subjected to heat from the heat source, of a material with better heat conductivity than the material in the upper layer, for distributing heat to the upper layer.

For frying on a large scale, there is usually used a griddle table with a griddle of cast iron. The surface of the griddle table will thus be comparatively porous, resulting in that a dish (i.e. the food for frying) can easily take up the taste of a previous dish. To avoid this, it is therefore necessary with careful cleaning of the griddle table between dishes which risk taking up the taste of each other. Before the griddle table can once again be used, fresh fat must be applied to fill the empty pores. A further disadvantage is that the griddle usually has a comparatively large thickness and will therefore be slow from the aspect of heat regulation. The relatively poor capacity for conducting heat of cast iron further results in that it is difficult to keep a uniform temperature in the griddle when the load on it varies during the course of food preparation.

Attempts have been made to eliminate in different ways the disadvantages of griddle tables with a cast iron griddle. The problems with fat oxidation have indeed been reduced by coating the upper side of a cast iron griddle with teflon, the cleaning possibilities being improved at the same time, but in return the resistance to wear of the griddle surface has been considerably deteriorated.

With modern electronics it has been possible rapidly and accurately to adjust the power of a heat source according to different desires. To obtain an easily managed and wear-resistant griddle table attempts have therefore been made to use a griddle of stainless steel and to control the temperature from the heat source with the aid of a digital regulator and a microcomputer using high level language. In this way the heating effect can be varied on the basis of registered temperature gradients. The actual temperature variations may thus be kept very small, and by utilising a heat source with great power a very rapid recovery may be achieved. However, the problem is that stainless steel has a comparatively good heat capacity but poor heat conductivity. Thus, if a steak is put on a stainless steel griddle (sheet metal) the heat rapidly disappears under the steak. New heat must therefore be supplied from below, with the result that other unloaded zones on the griddle will be severely heated, depending on the sluggishness of the plate (poor heat conductivity). Such a griddle table would be very sensitive and difficult to use. For achieving good heat distribution over the surface of the griddle, attempts have been made to screw plates of aluminium and copper under a plate of stainless steel. An example of such a solution is to be found in US-A- 3 245 462. The result was not satisfactory, since air gaps between the plates are easily formed locally, with very poor heat conduction as a result. Furthermore, wear problems occur due to the difference in linear expansion between the plates. Also, such a type of griddle has been found to suffer the disadvantage that during use there is formed a plurality of minor undulations in the surface of the plate, resulting in local collections of frying fat in the depressions formed. To a certain extent this has been found to make frying more difficult, and an improvement of the flatness of the griddle, with retained remaining good properties, has been found desirable. The mentioned undulations are caused by heat stresses in the relatively thin griddle, which is kept well fixed in a substructure in order to retain its shape to a reasonable degree. Conventional cast iron griddles are also practically impossible to get entirely flat. The problem in this case is that in connection with casting the plate there is formed a single depression with its greatest depth at the centre of the plate. Improving the flatness by subsequent machining has been found to result in a practically unusable frying surface, and one has been compelled to accept that cast iron griddles are not entirely flat.

For cooking equipment of the kind to be lifted by one hand it is since long known to use a material of the compound type, with an upper layer of corrosion resistant material and a lower layer of a material with better heat conductivity than the material in the upper layer. One such kind of equipment according to the preamble of claim 1 is shown in GB-A- 895 863. A lower layer of aluminium is cast onto a preformed upper layer of stainless steel. As the size increases, however, difficulties arise as to manufacture and good flatness.

It is further known from GB-A- 436 229 to apply a thin lower layer onto a preformed upper layer by spraying, but a solution of this kind is subject to warping when increasing the size.

The object of the invention is to eliminate the disadvantages of known equipment, and to provide a modern griddle table with improved properties.

This is achieved in accordance with the invention by making the griddle of the type where the upper layer is of metal and is a layer sprayed onto the lower layer.

In this way a cooking surface having a slight roughness can be obtained, which is good for food preparation. Further, it becomes easy to secure good flatness of the lower layer and to obtain a griddle with quick heat response and a very flat cooking surface.

A very advantageous embodiment of the griddle with improved stability is obtained if the lower layer is many times thicker than the upper layer, and if the heat source is arranged to heat the griddle from the inside.

A particularly simple embodiment is obtained if the heat source comprises at least one electric heating element arranged in the griddle. Such heating elements may be cast into the lower layer, for example, but may also be fitted in later, in prepared channels. By casting the lower layer of such as aluminium and then by molten metal spraying providing it with a thin upper layer of such as stainless steel, there is obtained a griddle where the lower layer can be machined to extreme flatness before applying the upper layer, which gives an excellent frying surface.

Further preferred embodiments of the invention are defined in dependent claims 4 to 8.

The invention will be explained in the following in detail with the aid of an embodiment illustrated on the accompanying drawing, where:

Figure 1 schematically illustrates how an apparatus in accordance with the invention is constructed,

Figure 2 is a plan of a griddle in accordance with the invention, divided into a plurality of separately regulatable temperature zones,

Figure 3 is a section illustrating the relative placing of griddle and heat source,

Figure 4 is a section along the line IV-IV in Figure 3, for one of the temperature zones indicated in Figure 2,

Figure 5 is a section through a portion of the upper part of a griddle table in accordance with the invention,

Figure 6 schematically illustrates how a modification of an apparatus in accordance with the invention is constructed,

Figure 7 is a plan of a griddle in accordance with Figure 6, divided into a plurality of separate, regulatable temperature zones,

Figure 8 is a detailed section through a griddle having a heat source other than the one illustrated in Figure 6, and

Figure 9 illustrates a detail of a griddle in accordance with Figures 6 and 7.

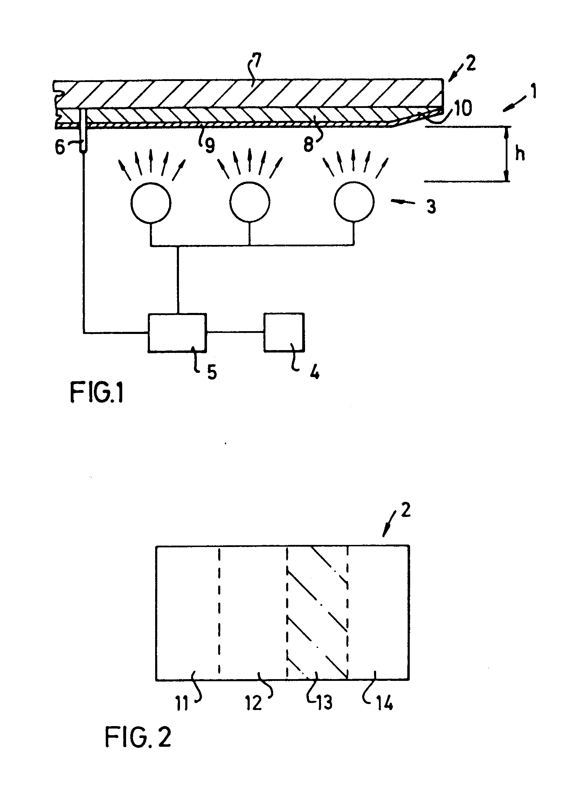

In figure 1 there is illustrated an apparatus 1 implemented in accordance with the invention for food preparation, particularly frying, this apparatus being provided with a griddle 2, associated with which there is a heat source 3 for heating the griddle from within. Via an operating means 4 connected to a regulating means 5 the operator can control the working cycle in a desired manner. The regulating means 5 obtains information via a temperature transducer 6 as to the prevailing temperature on the griddle 2. With the aid of a built - in microprocessor, the regulating means 5 can continuously monitor the temperature sequence and rapidly change the supplied power via the heat source 3, accurately to enable a desired temperature sequence in the griddle.

The griddle 2 itself is of a material of the compound type, with an upper layer 7 of a corrosion-resistant material and a lower layer 8 of a material which has better heat conductivity than the material in the upper layer 7. By a material of the compound type is preferably intended here a material where two different material layers are mutually united by covalent bonds. The production of such is made by molten metal spraying. The number of material layers does not necessarily need to be limited to two, and furthermore, each material layer does not necessarily need to be homogeneous but may be a mixture of different materials. In particular, the properties of the upper material layer may be affected by selection of a suitable material or mixture of materials, so that suitable properties of a food preparation system are obtained.

The griddle 2 may comprise a metal plate of the compound type which on its under-side is provided with a thin heat resistant coating 9, with the object of improving its absorption.

An advantageous embodiment is obtained by using stainless steel plate according to SIS 14-2333/43 for the upper layer 7 and by making the lower layer of aluminium, which is sprayed onto the stainless steel plate. There is thus gained the very large advantage that the griddle will be easy to wash. To ensure good adhesion between both metal layers the stainless steel surface is first prepared by steel grit blasting. Molten aluminium wire is then sprayed in drop form with the aid of a driving gas against the stainless steel surface, which has a working temperature of about 50-80°C. By spraying on a sufficient number of coatings, the aluminium layer may be given the desired thickness, in this case about 2-3 mm. The thickness of the stainless steel plate is about twice as much, about 5 mm.

Application by spraying of the aluminium coating results in that a certain porosity is obtained in it, something which improves the elasticity of this coating. The stresses arising from the upper and lower layers having different linear coefficients of expansion are thus reduced, resulting in that there is good coaction between both layers. For further reducing stresses and avoiding the formation of cracks in the lower layer of aluminium, the thickness thereof is gradually reduced, suitably right down to zero at edges or terminations, as illustrated at 10 in Figure 1. The face of the aluminium layer facing towards the heat source will be somewhat rough, due to the spraying process, which is advantageous from the aspect of taking up heat, since the area will thus be magnified. However, a disadvantage is that the aluminium coating is comparatively glossy, and therefore has large reflection (low absorption), which is unfavourable when using a heat source which generates long wave radiation (luminescent radiation) and fluorescent radiation (after glowing). To improve absorption ability, the lower face of the lower layer 8 is suitably painted with black, heat-resistant paint. The thickness of such a paint layer is about 50 $\mu$m.

Radiation elements operating at glowing temperature are used to advantage as heat source 3. To obtain good distribution of the radiation heat, the heat source 3 is therefore at a given distance h from the underside of the griddle 2. The magnitude of this distance may be such as about 20 mm, for a spacing between bar-shaped heating elements of about 30 mm.

As will be seen from Figure 2, a griddle 2 may to advantage be divided into a plurality of zones 11-14, each with its own heat source. These heat sources can be regulated individually via a common operating means 4 and a common regulating means 5, to obtain different temperatures in the different zones. There is accordingly enabled an effective utilisation of the griddle. For normal requirements it has been found to be sufficient with only two zones, but it is also possible entirely to dispense with zone division or to increase the number of zones further.

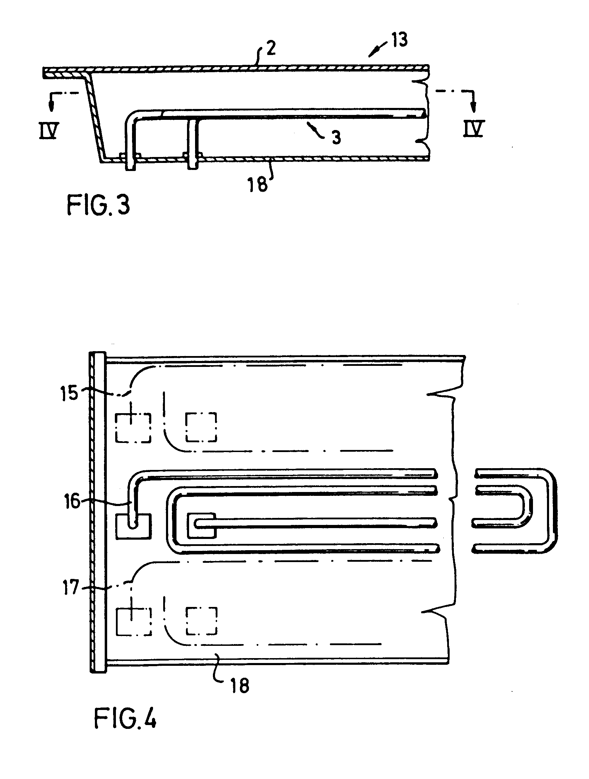

A possible embodiment of a heat source for the zone 13 in Figure 2 is illustrated more closely in Figures 3 and 4. As will be seen, three heating elements 15, 16 and 17 are utilised, of which only the heating element 16 is illustrated with full lines. The three heating elements are mounted without supports in a reflector box 18, which is suitably made from highly polished stainless steel sheet. The heating elements are completely surrounded by air in the reflector box, and they are all spaced from the griddle 2 such that there is no risk of their coming into contact with it. For a griddle divided into four different zones, there are thus four reflector boxes 18, each containing three heating elements, for example. All the reflector boxes 18 are suitably insulated on the outside with the aid of suitable insulation material, such as one of ceramic type.

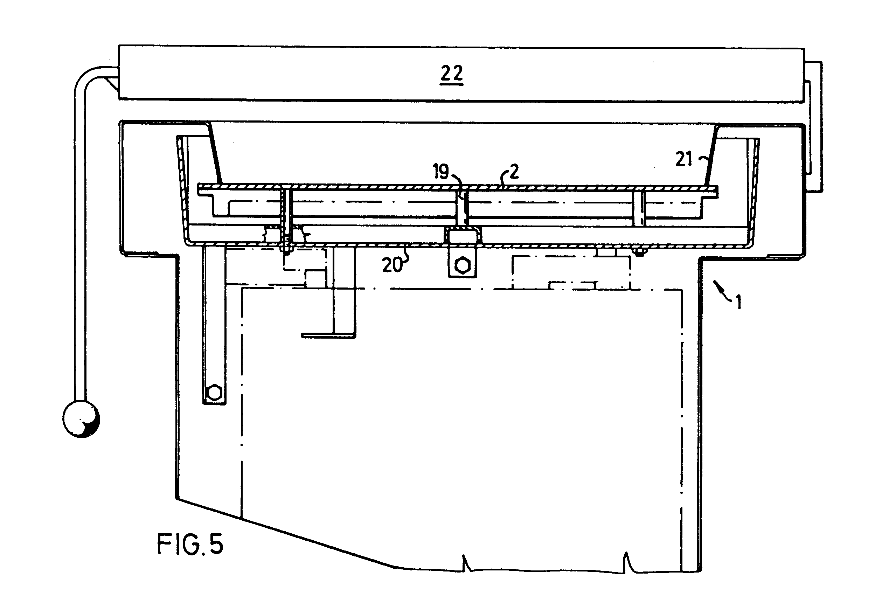

As will be seen from Figure 5, a griddle 2 is carried via a plurality of supports 19 by a substructure 20. Around the griddle 2 there is an upstanding wall 21, which is suitably attached to the griddle 2 by welding. In the space between the griddle 2 and substructure 20 there is room for reflector boxes 18 and insulation. There is a pivotable cover 22 at a distance above the griddle 2.

Within the scope of the invention, it is of course possible to alter the apparatus described above in different respects. Instead of stainless material, it is possible to use other corrosion-resistant metals, e.g. titanium or Hasteloy or other metals or metal alloys. In a corresponding way, other metals such as copper may be used instead of aluminium. However, the selected combination of stainless steel and aluminium has been found to give very good properties for a reasonable cost.

With a heat source according to the illustrated embodiment there is obtained an embodiment which facilitates repairs, where one or more heating elements can be easily changed as needed. Other embodiments and other heat sources may also be used, of course. For example, it is possible to eliminate the air gap between the lower layer and the heat source, such as to have the heat source engaging against the lower layer 8, or a coating applied thereto.

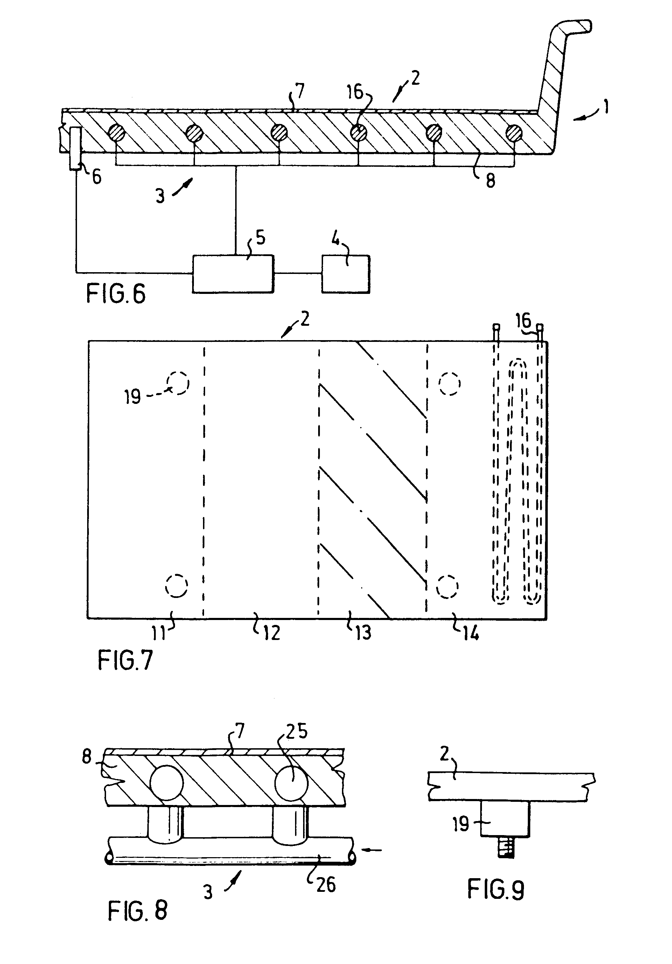

In an alternative embodiment according to Figure 6 the griddle 2 is instead thereof provided with a heat source 3 for heating the griddle from the inside. By forming the lower layer 8 with large thickness, it may be made to form a body which is very stable as to its form at different temperatures. This body can be given a high degree of flatness on its upper side, e.g. by suitable machining. The material in the lower layer may suitably be a metal or metal alloy having good heat conductivity, but other materials e.g. composite material with good heat conductivity may also come into question. A suitable material is aluminium, for example.

For reducing the stresses transferred from the upper layer 7 to the lower layer 8 during operation, the lower layer is many times thicker than the upper layer. A suitable relationship is that the upper layer thickness attains to at most 10% of the lower layer thickness. It is often suitable that the thickness of the upper layer attains to only about 1% of that of the lower layer. To advantage, the upper layer 7 may be of stainless chromium steel or other stainless alloy which is sprayed in a molten state on the lower layer 8, which is suitably of aluminium. Where the lower layer 8 has a thickness of about 25 mm of aluminium, a thickness of about 0.25 mm stainless chromium steel has been found to be suitable for the upper layer, with a size of griddle of about 0.6 x 1.0 m.

Application of the steel layer by spraying results in a certain porosity being obtained in the steel coating, something which improves the elasticity of this coating. There is thus further improved the coaction between the upper and the lower layer. The spray application further results in that the surface of the upper layer will be very hard and resistant to wear, simultaneously as the frying properties are improved in comparison with an ordinary steel plate. Instead of stainless material, it is also possible to use other corrosion-resistant metals, such as titanium or Hasteloy or other metals or metal alloys. Possibly, such as suitable metal composite material, ceramicly based material or a mixture of a metal or metal alloy and a ceramicly based material can also come into question. The selected combination of stainless steel and aluminium have been found to give very good properties for a reasonable cost.

Elongate electric heating elements 16 are used to advantage as heat source 3, these elements being arranged in a suitable number in the lower layer 8 for transferring heat to it via conduction. These heating elements 16 may have a shape of the type indicated in Figure 7, and may be cast into the lower layer 8 on its production. There is thus ensured good heat transfer, but repairs will be difficult to carry out. An alternative is to arrange channels in the lower layer 8 instead, and to insert the heating elements into them. For improving the heat transfer in this case, and to make fusion more difficult a suitable agent can be introduced into possible intermediate space.

An alternative heat source 3 is indicated in Figure 8, where the lower layer 8 is provided with a plurality of channels 25 in which there flows a heated medium, e.g. oil or air, which is supplied via a line 26.

As will be seen from Figures 7 and 9, the griddle 2 is provided on its underside with a plurality of supports 19 for fixing it to the substructure of a griddle table in a manner corresponding to the one illustrated in Figure 5. These supports 19 can to advantage be made integrally with the lower layer 8.

## Claims

1. Apparatus for preparing food, particularly by frying, in which there is included a griddle (2) and a heat source (3) for heating the griddle, the griddle (2) being of a material of the compound type, with an upper layer (7) of corrosion-resistant material and a lower layer (8), subjected to heat from the heat source, of a material with better heat conductivity than the material in the upper layer, for distributing heat to the upper layer, characterized in that the griddle (2) is of the type where the upper layer (7) is of metal and is a layer sprayed onto the lower layer (8).

2. Apparatus as claimed in claim 1, characterized in that the lower layer (8) is many times thicker than the upper layer (7) and in that the heat source (3) is arranged to heat the griddle (2) from the inside.

3. Apparatus as claimed in claim 2, characterized in that the heat source (3) comprises at least one electrical heating element (16) disposed in the griddle (2).

4. Apparatus as claimed in claim 2, characterized in that the heat source (3) constitutes a heated medium flowing in channels (25) in the griddle (2).

5. Apparatus as claimed in any one of claims 2-4, characterized in that the thickness of the upper layer (7) attains to at most 10% of the thickness of the lower layer

6. Apparatus as claimed in any one of claims 1-5, characterized in that the upper layer (7) is of stainless steel.

7. Apparatus as claimed in any one of claims 1-6, characterized in that the lower layer (8) is of aluminium.

8. Apparatus as claimed in any one of claims 1-7, characterized in that the griddle (2) is subdivided into several separate, temperature-regulated zones (11-14).

## Revendications

1. Surface de cuisson d'un aliment, notamment en le faisant frire, qui comprend une plaque (2) et une source de chaleur (3) pour faire chauffer la plaque, la plaque (2) étant d'une matière du type composé, avec une couche supérieure (7) composée d'une matière résistante à la corrosion et une couche inférieure (8), soumise à la chaleur de la source de chaleur, composée d'une matière ayant une meilleure conductibilité thermique que la matière de la couche supérieure, destinée à répartir la chaleur dans la couche supérieure, caractérisée en ce que la plaque (2) est du type où la couche supérieure (7) est en métal et est une couche pulvérisée sur la couche inférieure (8).

2. Surface de cuisson selon la revendication 1, caractérisée en ce que la coucha inférieure (8) est maintes fois plus épaisse que la couche supérieure (7) et en ce que la source de chaleur (3) est disposés de manière à chauffer la plaque (2) de l'intérieur.

3. Surface de cuisson selon la revendication 2, caractérisée en ce que la source de chaleur (3) comprend au moins un élément de chauffage électrique (16) disposé dans la plaque (2).

4. Surface de cuisson selon la revendication 2, caractérisée en ce que la source de chaleur (3) constitue un milieu chauffé circulant dans des canaux (25) dans la plaque (2).

5. Surface de cuisson selon l'une quelconque des revendications 2 à 4, caractérisée en ce que l'épaisseur de la couche supérieure (7) atteint au maximum 10% de l'épaisseur de la couche inférieure (8).

6. Surface de cuisson selon l'une quelconque des revendications 1 à 5, caractérisée en ce que la couche supérieure (7) est en acier inoxydable.

7. Surface de cuisson selon l'une quelconque des revendications 1 à 6, caractérisée en ce que la couche inférieure (8) est en aluminium.

8. Surface de cuisson selon l'une quelconque des revendications 1 à 7, caractérisée en ce que la plaque (2) est subdivisée en plusieurs zones séparées (11 à 14) à température régulée.

**Patentansprüche**

1. Vorrichtung zum Zubereiten von Nahrungsmittel, insbesondere durch Braten, mit einer Platte (2) und einer Wärmequelle (3) zum Erwärmen der Platte, wobei die Platte (2) aus einem Werkstoff des Verbundmaterialtyps mit einer oberen Schicht (7) aus korrosionsbeständigem Werkstoff und einer der Wärme von der Wärmequelle ausgesetzten unteren Schicht (8) aus einem Werkstoff mit besserer Wärmeleitfähigkeit als der Werkstoff der oberen Schicht, um die Wärme auf die obere Schicht zu verteilen, besteht, dadurch gekennzeichnet, daß die Platte (2) von der Art ist, bei welcher die obere Schicht (7) aus Metall besteht und eine auf die untere Schicht (8) aufgesprühte oder aufgespritzte Schicht ist.

2. Vorrichtung nach Anspruch 1, dadurch gekennzeichnet, daß die untere Schicht (8) um ein Mehrfaches dicker ist als die obere Schicht (7) und daß die Wärmequelle (3) so angeordnet ist, daß sie die Platte (2) von der Innenseite her erwärmt.

3. Vorrichtung nach Anspruch 2, dadurch gekennzeichnet, daß die Wärmequelle (3) mindestens ein in der Platte (2) angeordnetes elektrisches Heizelement (16) umfaßt.

4. Vorrichtung nach Anspruch 2, dadurch gekennzeichnet, daß die Wärmequelle (3) ein in Kanälen oder Leitungen (25) in(nerhalb) der Platte (2) strömendes erwärmtes Medium darstellt oder bildet.

5. Vorrichtung nach einem der Ansprüche 2 bis 4, dadurch gekennzeichnet, daß die Dicke der oberen Schicht (7) höchstens 10% der Dicke der unteren Schicht (8) beträgt.

6. Vorrichtung nach einem der Ansprüche 1 bis 5, dadurch gekennzeichnet, daß die obere Schicht (7) aus nichtrostendem Stahl besteht.

7. Vorrichtung nach einem der Ansprüche 1 bis 6, dadurch gekennzeichnet, daß die untere Schicht (8) aus Aluminium besteht.

8. Vorrichtung nach einem der Ansprüche 1 bis 7, dadurch gekennzeichnet, daß die Platte (2) in mehrere getrennte, temperaturgeregelte Zonen (11 - 14) unterteilt ist.

FIG.1

FIG. 2

FIG. 3

FIG. 4

FIG.5

FIG.6

FIG.7

FIG. 8

FIG.9